# EUROPEAN PATENT SPECIFICATION

(11) **EP 2 656 661 B1**
(45) Date of publication and mention of the grant of the patent: **09.03.2016**
(21) Application number: 11813410.5
(22) Date of filing: 19.12.2011
(51) Int. Cl.: H04L 29/06, H04W 40/02, H04W 84/10, H04W 92/12, H04W 12/08

(54) **MULTIPLE GATEWAY HANDLING FOR SUPPORTING NETWORK SHARING OF HOME BASE STATIONS**
HANDLING VON MEHREREN GATEWAYS ZUR UNTERSTÜTZUNG DER GEMEINSAMEN NUTZUNG DER HEIMBASISSTATIONEN
TRAITEMENT DE PASSERELLES MULTIPLES POUR PRENDRE EN CHARGE LE PARTAGE DE RÉSEAUX DE STATIONS DE BASE LOCALES

(30) Priority: 23.12.2010 US 201061426717 P; 31.03.2011 US 201113077657
(43) Date of publication of application: 30.10.2013
(73) Proprietor: Telefonaktiebolaget LM Ericsson (publ), 164 83 Stockholm (SE)
(72) Inventor: MILDH, Gunnar, SE-192 55 Sollentuna (SE); FODOR, Gabor, SE-165 52 Hasselby (SE); HEDBERG, Tomas, SE-112 69 Stockholm (SE); VIKBERG, Jari, SE-153 38 Järna (SE)
(74) Representative: Rees, Simon John Lewis
(86) International application number: PCT/IB2011/055797
(87) International publication number: WO 2012/085829

(56) References cited:
- "Universal Mobile Telecommunications System (UMTS); LTE; Security of Home Node B (HNB) / Home evolved Node B (HeNB) (3GPP TS 33.320 version 9.3.0 Release 9)", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. 3GPP SA 3, no. V9.3.0, 1 October 2010 (2010-10-01), XP014061682,
- "LTE; Evolved Universal Terrestrial Radio Access (E-UTRA) and Evolved Universal Terrestrial Radio Access Network (E-UTRAN); Overall description; Stage 2 (3GPP TS 36.300 version 9.4.0 Release 9)", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. 3GPP RAN 2, no. V9.4.0, 1 July 2010 (2010-07-01), XP014047460,
- "LTE; Telecommunication management; Home enhanced Node B (HeNB) Operations, Administration, Maintenance and Provisioning (OAM&P); Procedure flows for Type 1 interface HeNB to HeNB Management System (HeMS) (3GPP TS 32.593 version 9.0.0 Release 9)", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. 3GPP SA 5, no. V9.0.0, 1 February 2010 (2010-02-01), XP014046814,
- "Universal Mobile Telecommunications System (UMTS); LTE; Network sharing; Architecture and functional description (3GPP TS 23.251 version 9.2.0 Release 9)", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. 3GPP SA 2, no. V9.2.0, 1 March 2010 (2010-03-01), XP014046433, cited in the application

## Description

### CROSS REFERENCE

This application claims the benefit of provisional Application No. 61/426,717, filed December 23, 2010, entitled *Multiple Gateway Handling for Supporting Network Sharing of Home Base Stations.*

### THECHNICAL FIELD

Various embodiments described herein relate to radio frequency communications and, more particularly, to wireless communication networks and devices, and methods of operating same.

### BACKGROUND

Wireless communication networks are increasingly being used for wireless communication with various types of wireless user equipment. The wireless network itself may include a plurality of space-apart wireless base stations, also commonly referred to as "basle station.", "radio access nodes" or simply as "nodes", that define a plurality of cells, and a core network that controls the base stations and interfaces the base stations with other wired and/or wireless networks. The base stations may be terrestrial and/or space-based. The base stations communicate with wireless User Equipment (UE) using radio resources that are allocated to the wireless network. The radio resources may be defined in terms of time (for example, in a Time Division Multiple Access (TDMA) system), frequency (for example, in a Frequency Division Multiple Access (FDMA) system) and/or code (for example, in a Code Division Multiple Access (COMA) system). The base stations may use licensed and/or unlicensed frequency spectrum. Radio resources may be assigned to UEs by the wireless network upon initial communication and may be reassigned due to, for example, movement of the UEs, changing bandwidth requirements, changing network traffic, etc.

Various types of base stations have been employed during the evolution of wireless communications networks to define various types and sizes of cells deployed by an operator. The cellular industry refers to specific types of cells using loosely defined terms such as macro-cells, micro-cells and pico-cells in respective order of decreasing size. While it is difficult to pin down specific characteristics for these categories, cells, now often referred as "macro-cells", are deployed to provide the wildest coverage area. Macro-cell base stations may have typical power output ranges from the tens to hundreds of watts, and macro-cell diameter of up to 10km or more in size may be provided. A typical macro-cell has a site with a tower mounted antenna. Smaller cells, now typically referred to as "micro-cells", were also deployed to provide additional fill-in capacity where needed over relatively short ranges, such as about 300m to about 2,000m, and may have an output power of a few watts. Even smaller and lower power base stations, often referred to as "pico-base stations" have been deployed with a power output of less than about 1 watt and a cell size of about 200m or less. While these definitions are provided to frame the succeeding material, it should be noted that various embodiments described herein relate to a hierarchy with macro-cells having large coverage areas and pico-cells having smaller coverage areas than macro-cells or micro-cells.

The latest type of base station is often referred to as a "femto-base station". These femto-base stations may be designed primarily for indoor coverage, and may have power output in the range of between about 1/10 to 1/2 watt, and cell size on the order of about 10-30m. These femto-base stations typically are portable, consumer-deployed units that may use licensed or unlicensed spectrum. Often, the backhaul to the wireless communications network is via a consumer-provided packet data connection, rather than a dedicated or leased line switched circuit backhaul used in the other types of base stations described. Accordingly, femto-base stations are a type of base station that may be referred to generically as a "re-deployable" base station. Some pico-base stations may be re-deployable as well.

These re-deployable base stations may have various power ranges, backhaul connection mechanism and/or user terminal frequency spectrum, but can be installed by a customer or user without the need for intervention of a cellular operator. For example, they can be connected to an individual Digital Subscriber Line (DSL) and/or cable TV line, to provide for a broadband Internet connection. As such, they are often referred to as "home base stations". The re-deployable base station may be limited in range, as well as limited to be able to provide service to a limited number of UEs, for example, only UEs registered to a single customer or a group of UEs, such as a small business.

One option currently available to network operators is to use shared network infrastructure and sites, i.e., when multiple cellular operators agree to deploy their networks together. Support for network sharing has been built into many network standards. Unfortunately, a home base station currently only connects to one home base station gateway in one network, so that it may be difficult to support network sharing in the home base station environment. Since it is expected that the number of home base stations could be very large, this may present a problem in the implementation of home base stations.

### SUMMARY OF THE INVENTION

A home base station, according to the independent claim 1, is shared among multiple Public Land Mobile Networks (PLMNs) by performing various operations at the home base station. The home base station receives from a User Equipment (UE) an identification of a selected PLMN among the multiple PLMNs, to which the UE is to be connected. The home base station identifies an Internet Protocol security ("IPsec,") tunnel that is associated with a security gateway of the selected PLMN and an S1 or Iu interface that is associated with a home base station gateway of the selected PLMN, The home base station then communicates between the UE and the selected PLMN using the IPsec, tunnel that is associated with the security gateway of the selected PLMN and the S1 or Iu interface that is associated with the home base station gateway of the selected PLMN.

In some embodiments, the IPsec tunnel, S1 or Iu interface is identified by obtaining a mapping table that includes a list of the multiple PLMNs to which the UE can be connected, an identification of a corresponding IPsec tunnel that is associated with a corresponding security gateway of a respective PLMN in the list and an identification of a corresponding S1 or Iu interface to a corresponding home base station gateway of a respective PLMN in the list. The mapping table is then accessed to identify the IPsec tunnel that is associated with a security gateway of the selected PLMN and the S1 or Iu interface that is associated with a home base station gateway of the selected PLMN. As used herein, a "table" means any two-dimensional data structure that can represent PLMNs and various identifications, and may be represented as a database, memory map, linked-list and/or other conventional representation.

In other embodiments, the mapping table includes a list of the multiple PLMNs to which the UE can be connected and an IP address of a corresponding security gateway of a respective PLMN in the list. The mapping table is accessed to identity the IP address of the security gateway that is associated with the selected PLMN. The mapping table may be obtained from an operation and maintenance system that is associated with one of the PLMNs, and may be obtained as part of an initialization procedure of the home base station and/or as part of a maintenance procedure of the home base station.

In some embodiments, the home base station receives the identification of the selected PLMN from the UE by transmitting a list of the multiple PLMNs to the UE, and by receiving from the UE the identification of the selected PLMN to which the UE is to be connected, as an information element that points to a PLMN on the list of the multiple PLMNs that was transmitted. In other embodiments, the home base station receives from the UE the identification the selected PLMN to which the UE is to be connected, as an information element. These operations may be performed during registration of the UE with the home base station.

In some embodiments, the home base station operates under the UTRAN standard and the home base station receives the identification of the selected PLMN. from the UE by receiving an RRC Initial Direct Transfer message from the UE including the identification of the selected PLMN to which the UE is to be connected. In other embodiments, the home base operates under the E-UTRAN standard and the identification of the selected PLMN is received by the home base station by receiving an RRC Connection Setup Complete message from the UE including the identification of the selected PLMN to which the UE is to be connected.

Finally, in any of the embodiments described above, the IPsec tunnel that is associated with the security gateway of the selected PLMN and the S1 or Iu interface that is associated with the home base station gateway of the selected PLMN may be established prior to communicating with the selected PLMN.

Various other embodiments described herein can provides a home base station according to the independent claim 9.

In some embodiments, the home base station also includes a mapping table that is configured to include a list of the available PLMNs to which the wireless user Equipment can be connected and a corresponding IP-based communication path to a corresponding home base station gateway of a respective PLMN in the list. The processor may be configured to identify an IP-based communication path to a home base station gateway that is associated with the selected PLMN by accessing the mapping table. In other embodiments, the processor is further configured to receive the mapping table from one of the PLMNs via the network interface. The processor may be configured to receive the mapping table from an operation and maintenance system that is associated with one of the PLMNs via the network interface as part of an initialization procedure of the home base station and/or as part of a maintenance procedure of the home base station. Moreover, as was described above, the communication path to the home base station gateway comprises an IPsec tunnel to a security gateway of the PLMN and an S1 or Iu interface from the security gateway of the PLMN to the home base station gateway of the PLMN.

Still other embodiment described herein provide a PLMN according to the independent claim 14.

In other embodiments, the home base station operation and maintenance system is further configured to provide to the shared home base station a mapping table that includes a list of the multiples PLMNs to which the shared home base station can be connected and the corresponding IP addresses or the corresponding security gateways as part of an initialization procedure of the shared home base stations and/or as part of a maintenance procedure of the shared home base station.

### BRIEF DESCRIPTION OF THE DRAWINGS

Figure 1 is a block diagram of a wireless network architecture including a home base station.
Figure 2 is a block diagram of a wireless network architecture including data routing when using a shared home base station gateway.
Figure 3 is a block diagram illustrating how a home base stations gateway processes an "initial UE message" to determine a selected PLMN.
Figure 4 is a block diagram illustrating the determination of a target PLMN.
Figure 5 is a block diagram or a network architecture including a shared home base station according to various embodiments described herein.
Figure 6 is a block diagram of a User Equipment (UE) according to various embodiments described herein.
Figure 7 is a block diagram or a home base station according to various embodiments described herein.
Figures 8-10 are flowcharts of various operations that may be performed by a shared home base station according to various embodiments described herein.

### DETAILED DESCRIPTION

### Overview

The usage of mobile broadband services using cellular networks has shown a significant increase during the latest years. In parallel to this there is an ongoing evolution of 3G and 4G cellular networks like HSPA / LTE / WiMAX in order to support ever increasing performance with regards to capacity, peak bit rates and coverage. Operators deploying these networks are faced with a number of challenges, e.g., related to site and transport costs and availability and lack of wireless spectrum. Many different techniques are considered for meeting these challenges and providing cost efficient mobile broadband.

One option available to the operators is to use shared network infrastructure and sites, i.e. when multiple cellular operators agree to deploy their networks together. This is beneficial since it can reduce the total deployment costs, and can provide benefits due to pooling of the available spectrum. A drawback with network sharing in its current form is that it may require quite a lot of cooperation between the operators sharing the network since the network configuration is common for the part of the network that is shared, making it difficult to differentiate the treatment of users from each operator. This also may make interaction (e.g. handover) with the non-shared part more complex, since the shared part may need to interact with multiple non-shared networks.

The support for network sharing has been enhanced in the 3GPP UTRAN and E-UTRAN standards and is defined in for instance the standards at Sections 23.251, 23.401, 33.320 and 36.300 (all available at ftp://ftp.3gpp.org/Specs/latest). The standard allows different scenarios for network sharing, but it is expected that a common scenario will be when the Radio Access Network (RAN) is shared and each operator has its own Core Network (CN). This scenario is called MOCN in 3GPP. From a technical point of view the MOCN configuration uses the multi-to-multi connectivity of the Iu (25.413) and S1 (36.413) interfaces between the RAN and CN. This makes it possible to connect a RAN node e.g. RNC or eNB to multiple CN nodes e.g. SGSN, MME belonging to different operators. The RAN will in this configuration broadcast one PLMN identity for each operator sharing the RAN (25.331, 36.331). The UE will at initial attach select which PLMN it wants to connect to and the RAN will make sure that the initial attach signaling is routed to the correct operator's CN (23.401, 23.060). Once the UE has been assigned a CN node there are also mechanism making it possible for the RAN and CN to route subsequent signaling related to this UE to the same CN node. Besides the list of PLMN IDs almost all of the rest of the system information (25.331, 36.331) broadcast on the cell broadcast channels in the shared RAN is common for all operators sharing the RAN. Current exceptions are:
- E-UTRAN: the parameter "cellReservedForOperatorUse" is per PLMN.
- UTRAN: the parameters "Domain Specific Access Restriction Parameters For Operator N", "Paging Permission with Access Control Parameters For Operator N" are per PLMN.

Another option available to the operator is the deployment of home base stations, e.g., HeNB (LTE), HNB (HSPA), femto (name used by femtoforum.org), or other small base stations complementing the traditional macro cellular network. Possible benefits of these small base stations are lower site costs due to smaller physical size and lower output power, as well as increased capacity and coverage due to the closer deployment to the end user. The operator can configure cells as Open, Hybrid or Closed. Open cells are possible to use for all subscribers, with no preference to perform cell reselection to individual cells. Closed cells broadcast a CSG (Closed Subscriber Group) cell type (called CSG Indication that can either indicate values "true" or "false") and identity (called CSG-ID that is a 27-bit identifier). Closed cells are only available for UE belonging to the specific CSG. When the cell is closed the CSG Indication broadcasted has the value "true". Hybrid cells broadcast a CSG (Closed Subscriber Group) identity, but in this case the CSG Indication broadcast has the value "false". Hybrid cells are available for all users. In addition, users belonging to the CSG have a preference for selecting CSG cells with the same CSG identity.

Since it is expected that the number of home base stations could be very large and that they are considered a less reliable node, solutions have been introduced in the standard for home base stations to connect to the CN via a home base station gateway (H(e)NB GW). The H(e)NB GW has the functionality to hide the home base station from the rest of the network.

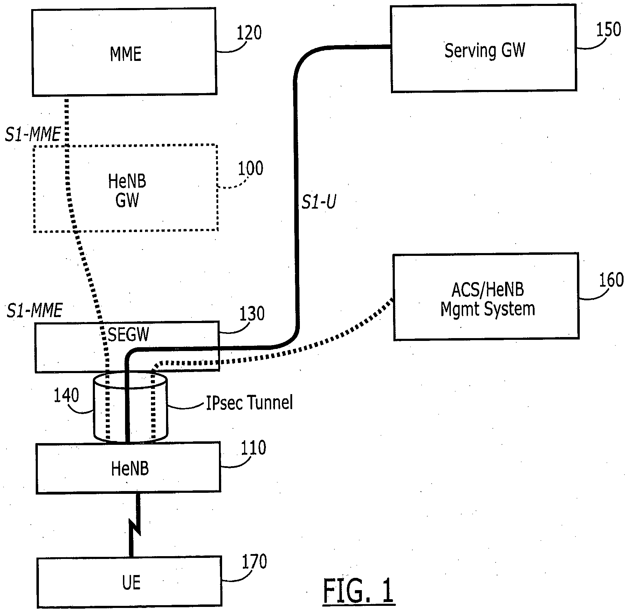

In the LTE/SAE case, the HeNB GW is optional and therefore has S1-interfaces on both sides of it. For the rest of the network the HeNB GW just looks like a large eNB with many cells. From the HeNB point of view the HeNB GW looks like a CN node (MME). Figure 1 shows an overview of a current architecture for supporting HeNB **110** The HeNB **110** only connects to one HeNB GW **100** and in this case the HeNB **110** does not have the network node selection functionality allowing the HeNB **110** to connect to multiple HeNB GW nodes. Instead the HeNB GW **100** supports the networks node selection functionality enabling support for MME-pools **120**. In the case when the HeNB **110** connects directly to the CN the HeNB **110** supports the network node selection functionality. The HeNB **110** communicates with a security gateway (SEGW) **130** via an IPsec tunnel **140**, and also communicates with a serving gateway **150** and a Management System **160** via the SEGW **130**. UE **170** communicates with the HeNB **110**.

In the HSPA/WCDMA case, the HNB GW is mandatory. A new Iuh-interface is defined between the HNBs and the HNB GW and normal Iu-interface is used between the HeNB GW and the CN. For the rest of the network the HNB GW just looks like a large RNC with many service areas (that is the UTRAN concept for one or multiple cells). The HNB only connects to one HNB GW, and the HNB does not have the network node selection functionality allowing the HNB to connect to multiple HNB GW nodes. Instead the HNB GW supports the network node selection functionality enabling supports for MSC and SGSN-pools.

### Problems

Since the H(e)NB currently only connects to one H(e)NB GW, it is not possible to support RAN sharing where each operator has its own H(e)NB GW. This issue is particularly severe in WCDMA where the HeNB GW is mandatory.

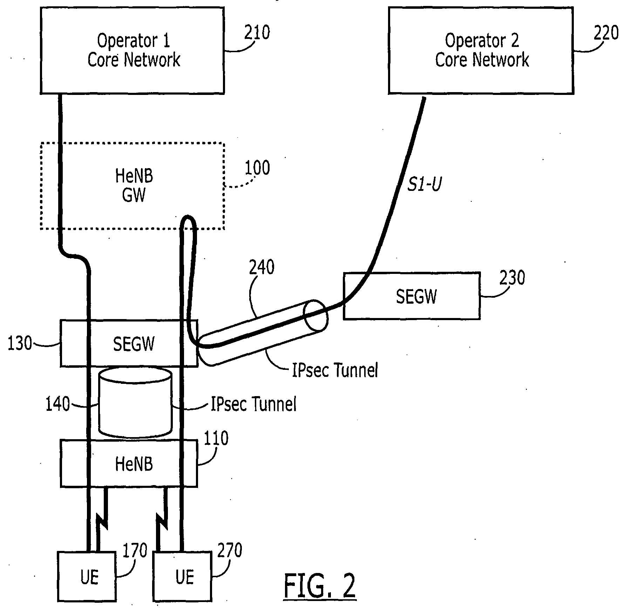

Not supporting multiple H(e)NB GWs forces operators deploying H(e)NBs to have a common H(e)NB GW (and security GW) and then have separate CN (e.g. according to MOCN configuration). This is, however, not so convenient since all traffic needs to be routed via the H(e)NB GW which might be located in one of the operators's network and then the traffic need to be routed back to the other operator's network, potentially going multiple times through a security gateway, as illustrated in Figure 2.

Specifically, Figure 2 shows two different Security gateways (SEGW)s **130** and **230**. The SEGW to the left **130** is acting as normally as defined in 3GPP TS 25.467 and terminates the IPsec tunnel **140** from the HeNB **110**. The other SEGW **240** (i.e., the one to the right and protecting the network **220** of operator 2) is performing other types of security functions. Figure 2 shows an example when an IPsec tunnel **240** is established between the two SEGWs **130** and **230** in the different networks **210** and **220** for the traffic sent to and from the HeNB GW **100** to the network of Operator 2 **220** based on communication with the UE **270**. This back and forth routing introduces unnecessary delays and a waste of transport network capacity.

There is currently a debate in 3GPP whether H(e)NBs (in Hybrid or Closed mode) can be shared among operators (see e.g. 3GPP documents G2-100392, R3-103428, R2-106263, R2-106594, R2-106914, R2-106615, R2-106616, R2-106942, R3-103429, R3-103674, R3-103742, R3-103126), in 3GPP Rel-9. Remaining issues are e.g.:

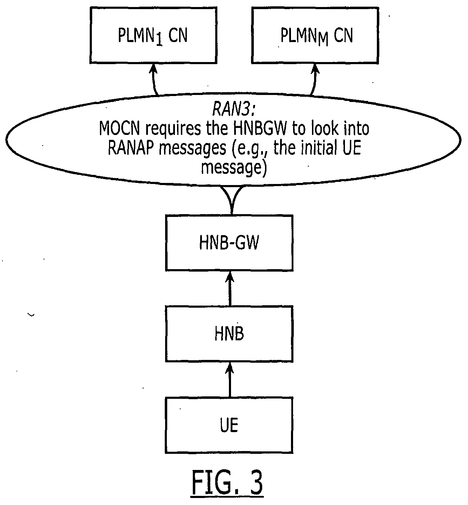

As shown in Figure 3, at UE Registration the UTRAN HNB GW must look into the 'Initial UE message' to determine the selected Core Network. This applies only to the HSPA/WCDMA case. Figure 3 illustrates this problem in an example, communication system.

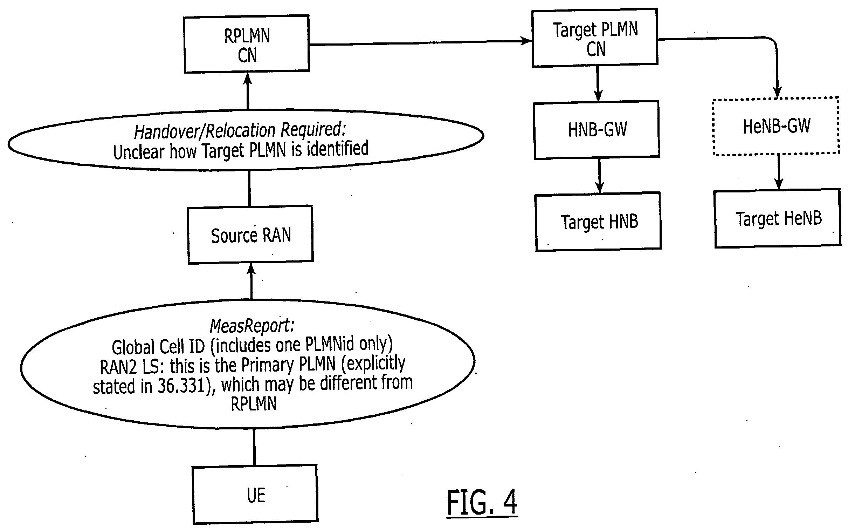

As shown at Figure 4, at Handover from one RPLMN to another PLMN using an inbound Handover procedure, it is unclear how the target PLMN is determined. This applies to both the And the HSPA/WCDMA cases. Figure 4 illustrates this problem in an example communication system.

All the solutions discussed in 3GPP assume that the operator also is sharing the H(e)NB GW hence they are not addressing the problems identified above.

### Description

Various embodiments described herein enable the H(e)NB to connect to multiple H(e)NB-GWs in different PLMNs (i.e. belonging to different operators), thus avoiding the need to share H(e)NB GW, which could lead to inefficient routing of user data.

Various embodiments described herein enable the H(e)NB to connect to multiple H(e)NB-GWs in different PLMNs.

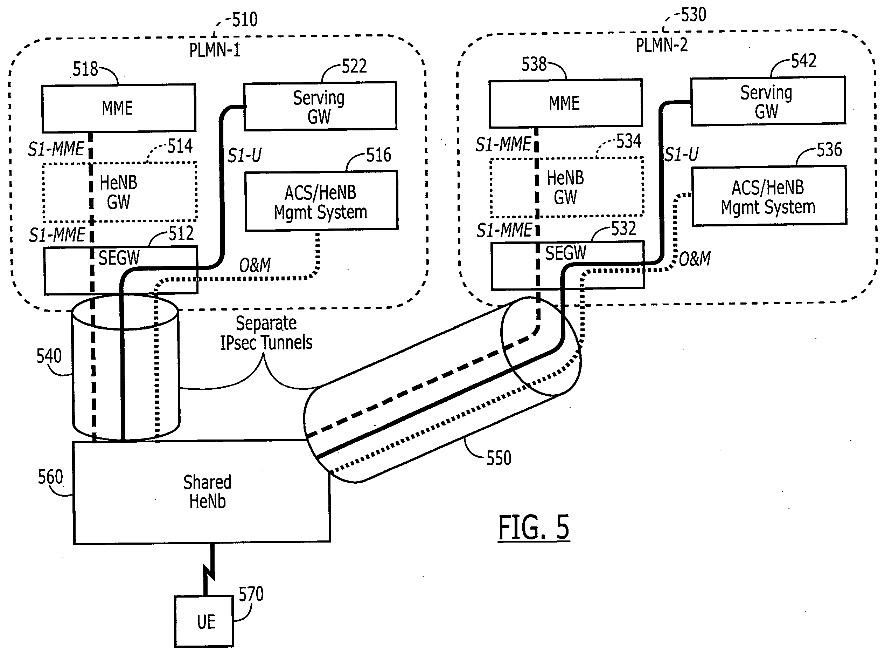

Various embodiments are illustrated in Figure 5 for the case of HeNBs (E-UTRAN). Similar embodiments also apply to sharing of HNBs (UTRAN).

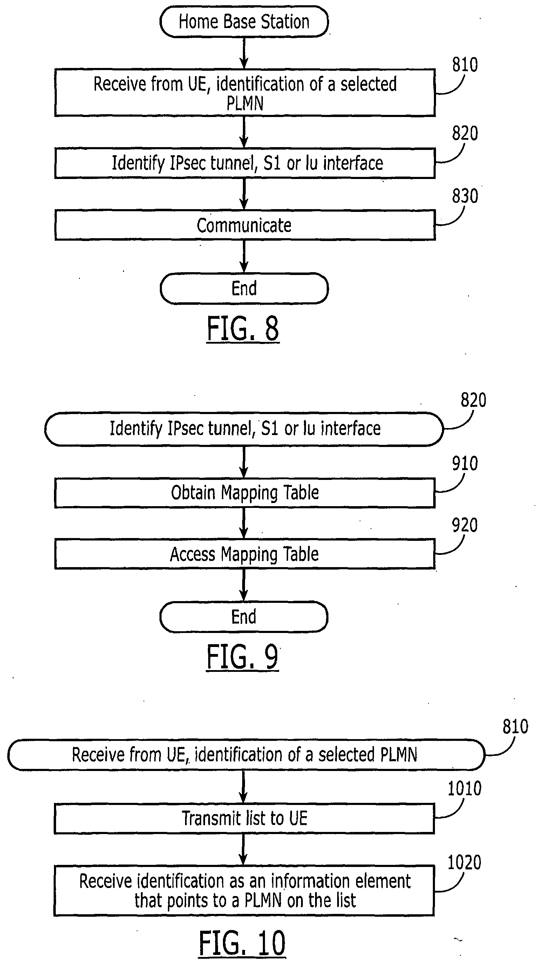

Various embodiments can provide the following new functionality:
1. O&M procedures to configure the Shared HeNB **560** with the information to which PLMN **510**, **530**, and SEGWs **512**, **532** and O&M Systems (ACS) **516**, **536** it should connect to.
2. The Shared H(e)NB **560** needs the mapping tables between the PLMN IDs and the IPsec tunnels **540**, **550** to route traffic from the different UEs **570** towards the correct CNs **510**, **530**.
3. When the UE **570** is connecting to the H(e)NB **560** it will indicate to the HeNB **560** to which PLMN **510**, **530** it is connecting, as illustrated at Block **810** of Figure 8, either as a separate Information Element (IE) with an integer (Block **1020** of Figure 10) pointed to the PLMN list broadcast by the H(e)NB (Block **1010** of Figure 10) or as a part of the registered MME IE. The H(e)NB will read this IE and select the IP tunnel **540**, **550** and associated S1/Iuh connection associated with that PLMN, as illustrated at Block **820** of Figure 8. The UE **570** and the selected PLMN **510**, **520** then communicate using the IPsec tunnel **540**, **550** that is associated with the security gateway **512**, **532** of the selected PLMN **510**, **530** and the S1 or Iu interface that is associated with the HeNB GW **514**, **534** of the selected PLMN **510**, **530**, as illustrated at Block **830** of Figure 8.

In E-UTRAN, the indication of the PLMN (Block **810** of Figure 8) will be transferred in the RRC Connection Setup Complete message, while in UTRAN the indication (block **810** of Figure 8) will be transferred in the RRC initial Direct Transfer message, as was described above in connection with Figure 1.

The above new functionality therefore provides techniques for sharing a home base station among multiple PLMNs as illustrated, for example, in Figure 8. As shown at Block **810**, the home base station receives from a UE an identification of a selected PLMN among the multiple PLMNs, to which the UE is to be connected. A communication path is then identified to a home base station gateway that is associated with the selected PLMN, for example, by identifying an IPsec tunnel that is associated with a security gateway of the selected PLMN and an S1 or Iu interface that is associated with the home base station gateway of the selected PLMN, as illustrated in Block **820**. The home base stations then communicate between the UE and the selected PLMN. over the communication path that was identified, for example, by communicating with the selected PLMN. using the IPsec tunnel that is associated with the security gateway of the selected PLMN and the S1 or In interface that is associated with the home base station gateway of the selected PLMN, as illustrated at Block **830**.

The above new functionality also provides techniques for identifying the IPsec tunnel, S1 or Iu interface of Block **820** as further illustrated in Figure 9. Specifically, at Block **910**, a mapping table is obtained that includes a list of the available PLMNs to which the wireless User Equipment can be connected and a corresponding IP-based communication path to a corresponding home base station gateway of a respective PLMN in the list. Specifically, as was described above, the mapping table may include a list or the multiple PLMNs to which the UE can be connected, an identification of a corresponding IPsec tunnel that is associated with a corresponding security gateway of a respective PLMN in the list, and an identification of a corresponding S1 or Iu interface to a corresponding home base station gateway of a respective PLMN on the list. Then, as illustrated in Block **920**, the mapping table is accessed to identity an IP-based communication path to a home base station gateway that is associated with the selected PLMN. Specifically, in some embodiments, the mapping table is accessed to identify the IPsec tunnel that is associated with a security gateway of the selected PLMN and the S1 or Iu interface that is associated with a home base station gateway of a selected PLMN.

The above new functionality also provides techniques for receiving from the UE an identification of a selected PLMN as was illustrated in Block **810** of Figure 8, and in Figure 10. Specifically, in some embodiments, a list of the multiple PLMN is transmitted to the UE, as illustrated at Block **910**, and an identification of the selected PLMN to which the UE is connected is received as an information element that points to the PLMN on the list of the multiple PLMNs that was transmitted, as illustrated at Block **920**.

### AdditionalDiscussion

Additional discussion of various embodiments described herein will now be provided. Specifically, various embodiments described herein can improve the possibility of supporting RAN sharing for H(e)NBs or other base stations. These embodiments can open up new business cases where third party operators deploy networks of base stations which can be shared by multiple operators, leading to better coverage, peak rates and capacity.

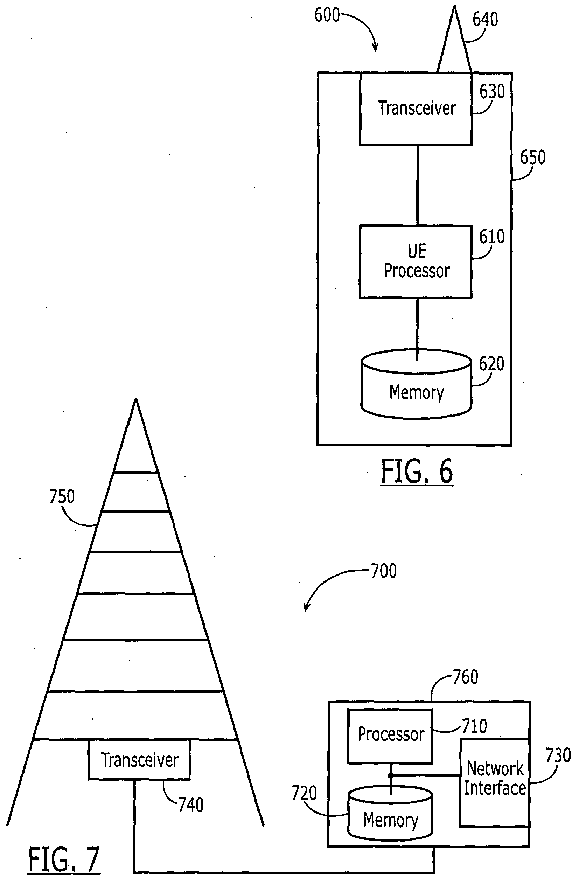

Although the Uses illustrated in the figures above may represent communication devices that include any suitable combination of hardware and/or software, these UEs may, in particular embodiments, represent devices such as the example UE illustrated in greater detail by Figure 6. Similarly, although the H(e)NBs illustrated in the figures above may represent network nodes that include any suitable combination, of hardware and/or software, these H(e)NBs may, in particular embodiments, represent devices such as the example base station illustrated in greater detail by Figure 7.

As shown in Figure 6, the example UE **600** includes a processor **610**, a memory **620**, a transceiver **630**, an antenna **640** and a housing **650**. In particular embodiments, some or all of the functionality described above as being provided by mobile communication devices or other forms of UE may be provided by the UE processor **610** executing instructions stored on a computer-readable medium, such as the memory **620** shown in Figure 6. Alternative embodiments of the UE may include additional components beyond those shown in Figure 6 that may be responsible for providing certain aspects of the UE's functionality, including any of the functionality described above and/or any functionality necessary to support the solution described above.

As shown in Figure 7, the example H(e)NB **700** includes a processor **710**, a memory **720**, a transceiver **740**, an antenna **750** and a housing **760**. In particular embodiments, some or all of the functionality described above as being provided by a home base station, an HeNB, an HNB, a femto base station, a base stations controller, a node B, an eNB, and/or any other type of mobile communications node may be provided by the H(e)NB **700** executing instructions stored on a computer-readable medium, such as the memory **720** shown in Figure 7. Accordingly, a home base station according to various embodiments described herein can include a wireless transceiver **740** that is configured to wirelessly communicate with wireless User Equipment, such as the wireless User Equipment of Figure 6, a network interface **730** that is configured to establish a communication path to a home base station gateway of a PLMN, and a processor **710**. Alternative embodiments of the H(e)NB may include additional components responsible for providing additional functionality, including any of the functionality identified above and/or any functionality necessary to support the solution described above.

Various embodiments were described herein with reference to the accompanying drawings, in which embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art.

It will be understood that, when an element is referred to as being "connected,", "coupled", "responsive", or variants thereof to another element, it can be directly connected, coupled, or responsive to the other element or intervening elements may be present. In contrast, when an element is referred to as being "directly connected", "directly coupled", "directly responsive", or variants thereof to another element, there are no intervening elements present. Furthermore, "coupled,", "connected", "responsive", or variants thereof as used herein may include wirelessly coupled, connected, or responsive. Like numbers refer to like elements throughout. The terminology used herein is for the purpose of describing particular embodiments only and is not intended to be limiting of the invention. As used herein, the singular forms "a", "an" and "the" are intended to include the plural forms as well, unless the context clearly indicates otherwise. Well-known functions or constructions may not be described in detail for brevity and/or clarity.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of the present invention. Moreover, as used herein, the term "and/or" includes any and all combinations of one or more ()f the associated listed items.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of this specification and the relevant art and will not be interpreted in an idealized or overly formal sense expressly so defined herein.

Various embodiments described herein can operate in any of the following Radio Access Technologies: Advanced Mobile Phone Service (AMPS), ANSI-136, Global Standard for Mobile (GSM) communication, General Packet Radio Service (GPRS), enhanced data rates for GSM evolution (EDGE), DCS, PDC, PCS, code division multiple access (CDMA), wideband-CDMA, CDMA2000, Universal Mobile Telecommunications System (UMTS), 3GPP LTE (3^{rd} Generation Partnership Project Long Term Evolution) and/or 3GPP LTE-A (LTE Advanced). For example, GSM operation can include reception/transmission in frequency ranges of about 824 MHz to about 849 MHz and about 869 MHz to about 894 MHz. EGSM operation can include reception/transmission in frequency ranges of about 880 MHz to about 914 MHz and about 925 MHz to about 960 MHz. DCS operation can include transmission/reception in frequency ranges of about 1410 MHz to about 1785 MHz and about 1805 MHz to about 1880 MHz. PDC operation can include transmission in frequency ranges of about 893 MHz to about 953 MHz and about 810 MHz to about 885 MHz. PCS operation can include transmission/reception in frequency ranges of about 1850 MHz to about 1910 MHz and about 1930 MHz to about 1990 MHz. 3GPP LTE operation can include transmission/reception in frequency ranges of about 1920 MHz to about 1980 MHz and about 2110 MHz to about 2170 MHz. Other Radio Access Technologies and/or frequency bands can also be used in various embodiments described herein. All these systems are designed to operate in a variety of bands typically known as the International Mobile Telecommunications (IMT) bands that are defined by the International Telecommunications Union - Radio Communication Bureau (ITU-R) and can, in general, be located in frequency ranges between 200 MHz and 5 GHZ within the current state of the art. It should, however, be noted that various embodiments described herein are equally applicable for any radio system, and are not restricted in any way to the IMT bands in any way.

For purposes or illustration and explanation only, various embodiments of the present invention were described herein in the context of wireless user terminals or User Equipment that are configured to carry out cellular communications (e.g., cellular voice and/or data communications). It will be understood, however, that the present invention is not limited to such embodiments and may be embodied generally in any wireless communication terminal that is configured to transmit and receive according to one or more radio access technologies.

As used herein, the therm "user equipment" includes cellular and/or satellite radiotelephone(s) with or without a display (text/graphical); Personal Communications System (PCS) terminal(s) that may combine a radiotelephone with data processing, facsimile and/or data communications capabilities; Personal Digital Assistant(s) (PDA) or smart phone(s) that can include a radio frequency transceiver and a pager, Internet/Intranet access, Web browser, organizer, calendar and/or a global positioning system (GPS) receiver; and/or conventional laptop (notebook) and/or palmtop (netbook) computer(s) or other appliance(s), which include a radio frequency transceiver. As used herein, the term "user equipment" also includes any other radiating user device that may have time-varying or fixed geographic coordinates aud/or may be portable, transportable, installed in a vehicle (aeronautical, maritime, or land-based) and/or situated and/or configured to operate locally and/or in a distributed fashion over one or more terrestrial and/or extra-terrestrial location(s). Finally, the term "base station" includes any fixed, portable and/or transportable device that is configured to communicate with one or more user equipment and a core network, and includes, for example, terrestrial cellular base stations (including microcell, picocell, wireless access point and/or ad hoc communications access points) and satellites, that may be located terrestrially and/or that have a trajectory above the earth at any altitude.

As used herein, the terms "comprise", "comprising", "comprises", "include", "including", "includes", "have", "has", "having", or variants thereof are open-ended, and include one or more stated features, integers, elements, steps, components or functions but does not preclude the presence or addition of one or more other features, integers, elements, steps, components, functions or groups thereof. Furthermore, if used herein, the common abbreviation "e.g.", which derives from the Latin phrase *exempli gratia*, may be used to introduce or specify a general example or examples of a previously mentioned item, and is not intended to be limiting of such item. If used herein, the common abbreviation "i.e.", which derives from the Latin phrase *id est*, may be used to specify a particular item from a more general recitation.

Exemplary embodiments were described herein with reference to block diagrams and/or flowchart illustrations of computer-implemented methods, apparatus (systems and/or devices) and/or computer program products. It is understood that a block of the block diagrams and/or flowchart illustrations, and combinations of blocks in the block diagrams and/or flowchart illustrations, can be implemented by computer program instructions that are performed by one or more computer circuits. These computer program instructions may be provided to a processor circuit of a general purpose computer circuit, special purpose computer circuit such as a digital processor, and/or other programmable data processing circuit to produce a machine, such that the instructions, which execute via the processor of the computer and/or other programmable data processing apparatus, transform and control transistors, values stored in memory locations, and other hardware components within such circuitry to implement the functions/acts specified in the block diagrams and/or flowchart block or blocks, and thereby create means (functionality) and/or structure for implementing the functions/acts specified in the block diagrams and/or flowchart block(s). These computer program instructions may also be stored in a computer-readable medium that can direct a computer or other programmable data processing apparatus to function in a particular manner, such that the instructions stored in the computer-readable medium produce an article of manufacture including instructions which implement the functions/acts specified in the block diagrams and/or flowchart block or blocks.

A tangible, non-transitory computer-readable medium may include an electronic, magnetic, optical, electromagnetic, or semiconductor data storage system, apparatus, or device. More specific examples of the computer-readable medium would include the following: a portable computer diskette, a random access memory (RAM) circuit, a read-only memory (ROM) circuit, an erasable programmable read-only memory (EPROM or Flash memory) circuit, a portable compact disc read-only memory (CD-ROM), and a portable digital video disc read-only memory (DVD/BlueRay).

The computer program instructions may also be loaded onto a computer and/or other programmable data processing apparatus to cause a series of operational steps to be performed on the computer and/or other programmable apparatus to produce a computer-implemented process such that the instructions which execute on the computer or other programmable apparatus provide steps for implementing the functions/acts specified in the block diagrams and/or flowchart block or blocks.

Accordingly, embodiments of the present invention may be embodied in hardware and/or in software (including firmware, resident software, micro-code, etc.) that runs on a processor such as a digital signal processor, which may collectively be referred to as "circuitry," "a module" or variants thereof.

Many different embodiments were disclosed herein, in connection with the following description and the drawings. It will be understood that it would be unduly repetitious and obfuscating to literally describe and illustrate every combination and subcombination of these embodiments. Accordingly, the present specification, including the drawings, shall be construed to constitute a complete written description of all combinations and subcombinations of the embodiments described herein, and of the manner and process of making and using them, and shall support claims to any such combination or subcombination.

In the drawings and specification, there have been disclosed embodiments of the invention and, although specific terms are employed, they are used in a generic and descriptive sense only and not for purposes of limitation, the scope of the invention being set forth in the following claims.

## Claims

1. A method of sharing a home base station (560) among multiple Public Land Mobile Networks, PLMNs, (510,530), comprising the following that are performed by the home base station:
receiving from a User Equipment, UE, (570), an identification of a selected PLMN among the multiple PLMNs, to which the UE is to be connected;
identifying an Internet Protocol security, IPsec, tunnel (540,550) that is associated with a security gateway (512,532) of the selected PLMN and an S1 or Iu interface that is associated with a home base station gateway (514,534) of the selected PLMN; and
communicating between the UE and the selected PLMN using the IPsec tunnel that is associated with the security gateway of the selected PLMN and the S1 or Iu interface that is associated with the home base station gateway of the selected PLMN.

2. A method according to Claim 1 wherein identifying an IPsec tunnel that is associated with a security gateway of the selected PLMN and an S1 connection and an Iu interface that are associated with a home base station gateway of the selected PLMN comprises:
obtaining a mapping table that includes a list of the multiple PLMNs to which the UE can be connected, and one of (a) an identification of a corresponding IPsec tunnel that is associated with a corresponding security gateway of a respective PLMN in the list and an identification of a corresponding S1 or Iu interface to a corresponding home base station gateway of a respective PLMN in the list or (b) an IP address of a corresponding security gateway of a respective PLMN in the list; and
accessing the mapping table to identify the IPsec tunnel that is associated with a security gateway of the selected PLMN and the S1 or Iu interface that is associated with a home base station gateway of the selected PLMN or the IP address of the security gateway that is associated with the selected PLMN.

3. A method according to Claim 2 wherein obtaining a mapping table comprises obtaining the mapping table from an operation and maintenance system that is associated with one of the PLMNs.

4. A method according to Claim 3 wherein obtaining the mapping table from an operation and maintenance system that is associated with one of the PLMNs comprises obtaining the mapping table as part of an initialization procedure of the home base station and/or as part of a maintenance procedure of the home base station.

5. A method according to Claim 1 wherein receiving from a UE an identification of a selected PLMN to which the UE is to be connected comprises:
transmitting a list of the multiple PLMNs to the UE; and
receiving from the UE the identification of the selected PLMN to which the UE is to be connected, as an information element that points to a PLMN on the list of the multiple PLMNs that was transmitted;
or
receiving from the UE the identification of the selected PLMN to which the UE is to be connected, as an information element.

6. A method according to Claim 5 wherein transmitting a list of the multiple PLMNs to the UE and receiving from the UE the identification of the selected PLMN to which the UE is to be connected as an information element that points to a PLMN on the list of the multiple PLMNs that was transmitted, or receiving from the UE the identification of the selected PLMN to which the UE is to be connected, as an information element, are performed during registration of the UE with the home base station.

7. A method according to Claim 5 wherein the home base station operates under the UTRAN standard and wherein receiving from the UE the identification of the selected PLMN to which the UE is to be connected comprises receiving from the UE the identification of the selected PLMN to which the UE is to be connected, as an information element, wherein the received identification comprises an RRC Initial Direct Transfer message including the identification of the selected PLMN to which the UE is to be connected, or an RRC Connection Setup Complete message including the identification of the selected PLMN to which the UE is to be connected.

8. A method according to Claim 1 further comprising:
establishing the IPsec tunnel that is associated with the security gateway of the selected PLMN and the S1 or Iu interface that is associated with the home base station gateway of the selected PLMN.

9. A home base station (560) arranged to connect to multiple Public Land Mobile Networks, PLMNs, (510, 530) comprising:
a wireless transceiver that is configured to wirelessly communicate with wireless user equipment (570),
a network interface that is configured to establish a communication path to a home base station gateway of a PLMN (514); and
a processor that is configured to receive from a wireless user equipment via the wireless transceiver, an identification of a selected PLMN among the multiple PLMNs, to which the wireless user equipment is to be connected;
the processor being further configured to identify a communication path to a home base station gateway that is associated with the selected PLMN, wherein the communication path comprises an Internet Protocol security, IPsec, tunnel (540, 550) that is associated with a security gateway of the selected PLMN (512,532) and an S1 or Iu interface that is associated with a home base station gateway of the selected PLMN, and to cause the network interface to communicate with the selected PLMN that was identified over the communication path that was identified, using the IPsec tunnel that is associated with the security gateway of the selected PLMN and the S1 or Iu interface that is associated with the home base station gateway of the selected PLMN.

10. A home base station according to Claim 9 further comprising:
a mapping table in a memory that is configured to include a list of the available PLMNs to which the wireless user equipment can be connected and a corresponding IP-based communication path to a corresponding home base station gateway of a respective PLMN in the list; and
wherein the processor is configured to identify an IP-based communication path to a home base station gateway that is associated with the selected PLMN by accessing the mapping table, wherein the IP-based communication path comprises an IP address of a corresponding security gateway of a respective PLMN in the list.

11. A home base station according to Claim 10 wherein the processor is further configured to receive the mapping table from one of the PLMNs via the network interface.

12. A home base station according to Claim 11 wherein the processor is further configured to receive the mapping table from an operation and maintenance system that is associated with one of the PLMNs via the network interface as part of an initialization procedure of the home base station and/or as part of a maintenance procedure of the home base station.

13. A home base station according to Claim 9 wherein the processor is further configured to:
transmit to the wireless user equipment a list of the plurality of available PLMNs to which the wireless user equipment can be connected; and
establish the communications path that was identified to the home base station gateway is associated with the selected PLMN.

14. A Public Land Mobile Network, PLMN, (510,530) comprising:
a security gateway (512,532) having an associated Internet Protocol security, IPsec, tunnel, wherein the security gateway is configured to communicate with a shared home base station (560) that is shared among multiple PLMNs, using the IPsec tunnel;
a home base station gateway (514,534) having an associated S1 or Iu interface, wherein the home base station gateway is configured to communicate with the shared home base station using the S1 or Iu interface; and
a home base station operation and maintenance system that is also configured to communicate with the shared home base station;
the home base station operation and maintenance system being further configured to provide to the shared home base station a mapping table that includes a list of the multiple PLMNs to which the shared home base station can be connected and a corresponding Internet Protocol, IP, address of a corresponding security gateway of a respective PLMN in the list;
wherein the shared home base station is configured to communicate with the home base station gateway in response to receiving a message from a wireless user equipment that identifies an IP address that corresponds to the security gateway.

15. A PLMN according to Claim 14 wherein the home base station operation and maintenance system is further configured to provide to the shared home base station a mapping table that includes a list of the multiple PLMNs to which the shared home base station can be connected and the corresponding IP addresses of the corresponding security gateways as part of an initialization procedure of the shared home base station and/or as part of a maintenance procedure of the shared home base station.

## Patentansprüche

1. Ein Verfahren zum Teilen einer Heimbasisstation (560) zwischen mehreren öffentlichen terrestrischen Mobilfunknetzwerken, PLMNs, (510, 530), umfassend die nachfolgenden Schritte, welche durch die Heimbasisstation ausgeführt werden:
Empfangen von einem Anwenderendgerät, UE, (570) einer Identifikation eines ausgewählten PLMN aus den mehreren PLMNs, zu welchem das UE zu verbinden ist;
Identifizieren eines Internetprotokoll-Sicherheit, IPsec,-Tunnel (540, 550), welcher mit einem Sicherheitsgateway (512, 532) des ausgewählten PLMN verknüpft ist, und eine S1- oder Iu-Schnittstelle, welche mit einem Heimbasisstation-Gateway (514, 534) des ausgewählten PLMN verknüpft ist; und
Kommunizieren zwischen dem UE und dem ausgewählten PLMN unter Verwendung des IPsec-Tunnels, welcher mit dem Sicherheitsgateway des ausgewählten PLMN verknüpft ist, und der S1- oder Iu-Schnittstelle, welche mit der Heimbasisstation-Gateway des ausgewählten PLMN verknüpft ist.

2. Ein Verfahren gemäß Anspruch 1, wobei ein Identifizieren eines IPsec-Tunnels, welcher mit einem Sicherheitsgateway des ausgewählten PLMN verknüpft ist, und einer S1-Verbindung und einer Iu-Schnittstelle, welche mit einem Heimbasisstation-Gateway des ausgewählten PLMN verknüpft sind, umfasst:
Erhalten einer Mappingtabelle, welche umfasst eine Liste der mehreren PLMNs, zu welchen das UE verbunden werden kann, und (a) eine Identifikation eines zugehörigen IPsec-Tunnels, welcher mit einem zugehörigen Sicherheitsgateway eines entsprechenden PLMN in der Liste verknüpft ist, oder eine Identifikation einer zugehörigen S1- oder Iu-Schnittstelle zu einem zugehörigen Heimbasisstation-Gateway eines entsprechenden PLMN in der Liste oder (b) eine IP-Adresse eines zugehörigen Sicherheitsgateways eines entsprechenden PLMN in der Liste; und
Zugreifen auf die Mappingtabelle zum Identifizieren des IPsec-Tunnels, welcher mit einem Sicherheitsgateway des ausgewählten PLMN verknüpft ist, und der S1- oder Iu-Schnittstelle, welche im mit einem Heimbasisstation-Gateway des ausgewählten PLMN verknüpft ist, oder der IP-Adresse des Sicherheitsgateways, welches mit dem ausgewählten PLMN verknüpft ist.

3. Verfahren gemäß Anspruch 2, wobei Erhalten einer Mappingtabelle ein Erhalten der Mappingtabelle von einem Betriebs- und Wartungssystem, welches mit einem der PLMNs verknüpft ist, umfasst.

4. Verfahren gemäß Anspruch 3, wobei Erhalten der Mappingtabelle von einem Betriebs- und Wartungssystem, welches mit einem der PLMNs verknüpft ist, ein Erhalten der Mappingtabelle als Teil eines Initialisierungsverfahrens der Heimbasisstation und/oder als Teil eines Wartungsverfahrens der Heimbasisstation umfasst.

5. Verfahren gemäß Anspruch 1, wobei Empfangen von einem UE einer Identifikation eines ausgewählten PLMN, zu welchem das UE zu verbinden ist, umfasst:
Übertragen einer Liste von mehreren PLMNs an die UE; und
Empfangen von dem UE der Identifikation des ausgewählten PLMN, zu welchem das UE zu verbinden ist, als ein Informationselement, welches auf ein PLMN in der Liste der mehreren PLMNs, welche übermittelt wurde, hinweist;
oder
Empfangen von dem UE der Identifikation des ausgewählten PLMN, zu welchem das UE zu verbinden ist, als ein Informationselement.

6. Verfahren gemäß Anspruch 5, wobei Übertragen einer Liste der mehreren PLMNs an das UE und Empfangen von dem UE der Identifikation des ausgewählten PLMN, zu welchem das UE zu verbinden ist, als ein Informationselement, welches ein PLMN auf der Liste der mehreren PLMNs, welche übertragen wurde, hinweist, oder ein Empfangen von dem UE der Identifikation des ausgewählten PLMN, zu welchem das UE zu verbinden ist, als ein Informationselement während einer Registrierung des UE mit der Heimbasisstation ausgeführt werden.

7. Verfahren gemäß Anspruch 5, wobei die Heimbasisstation gemäß dem UTRAN-Standard betrieben wird und wobei Empfangen von dem UE der Identifikation des ausgewählten PLMN , zu welchem das UE zu verbinden ist, ein Empfangen von dem UE der Identifikation des ausgewählten PLMN , zu welchem das UE zu verbinden ist, als ein Informationselement umfasst, wobei die empfangene Identifikation eine RRC-Initial-Direct-Transfer-Nachricht, umfassend die Identifikation des ausgewählten PLMN, zu welchem das UE zu verbinden ist, oder eine RRC-Connection-Setup-Complete-Nachricht, umfassend die Identifikation des ausgewählten PLMN, zu welchem das UE zu verbinden ist, umfasst.

8. Verfahren gemäß Anspruch 1 weiter umfassend:
Einrichten des IPsec-Tunnels, welcher mit dem Sicherheitsgateway des ausgewählten PLMN verknüpft ist, und der S1 oder Iu-Schnittstelle, welche mit dem Heimbasisstation-Gateway des ausgewählten PLMN verknüpft ist.

9. Eine Heimbasisstation (560), angeordnet zum Verbinden mit mehreren öffentlichen terrestrischen Mobilfunknetzwerken, PLMNs, (510, 530), umfassend:
einen drahtlosen Transceiver, welcher zum drahtlosen Kommunizieren mit einem drahtlosen Anwenderendgerät aus (570) ausgebildet ist,
eine Netzwerkschnittstelle, welche zum Einrichten eines Kommunikationspfads mit einem Heimbasisstation-Gateway eines PLMN (514) ausgebildet ist; und
einen Prozessor, welcher zum Empfangen von einem drahtlosen Anwenderendgerät über den drahtlosen Transceiver einer Identifikation eines ausgewählten PLMN aus den mehreren PLMNs, mit welchem das drahtlose Anwenderendgerät zu verbinden ist, ausgebildet ist;
wobei der Prozessor weiter ausgebildet ist zum Identifizieren eines Kommunikationspfads zu einem Heimbasisstation-Gateway, welches mit dem ausgewählten PLMN verknüpft ist, wobei der Kommunikationspfad einen Internet-Protokoll-Sicherheit-, IPsec, Tunnel (540, 550), welcher mit einem Sicherheitsgateway des ausgewählten PLMN (512, 532) verknüpft ist, und einer S1- oder Iu-Schnittstelle, welche mit einem Heimbasisstation-Gateway des ausgewählten PLMN verknüpft ist, und zum Veranlassen der Netzwerkschnittstelle zum Kommunizieren mit dem ausgewählten PLMN, welches über den Kommunikationspfad, welcher identifiziert wurde, unter Verwendung des IPsec-Tunnels, welcher mit dem Sicherheitsgateway des ausgewählten PLMN verknüpft ist, und der S1- oder Iu-Schnittstelle, welche mit dem Heimbasisstation-Gateway des ausgewählten PLMN verknüpft ist, identifiziert wurde.

10. Heimbasisstation gemäß Anspruch 9, weiter umfassend:
eine Mappingtabelle in einem Speicher, welche ausgebildet ist, eine Liste der verfügbaren PLMNs, zu welchem das drahtlose Anwenderendgerät verbunden werden kann, und einen zugehörigen IP-basierten Kommunikationspfad zu einem zugehörigen Heimbasisstation-Gateway eines entsprechenden PLMN in der Liste zu umfassen; und
wobei der Prozessor ausgebildet ist, um einen IP-basierten Kommunikationspfad zu einem Heimbasisstation-Gateway, welches mit dem ausgewählten PLMN verknüpft ist, durch Zugreifen auf die Mappingtabelle zu identifizieren, wobei der IP-basierte Kommunikationspfad eine IP-Adresse eines zugehörigen Sicherheitsgateways eines entsprechenden PLMN in der Liste umfasst.

11. Heimbasisstation gemäß Anspruch 10, wobei der Prozessor weiter ausgebildet ist, die Mappingtabelle von einem der PLMNs über die Netzwerkschnittstelle zu empfangen.

12. Heimbasisstation gemäß Anspruch 11, wobei der Prozessor weiter ausgebildet ist, die Mappingtabelle von einem Betriebs- und Wartungssystem, welches mit einem der PLMNs verknüpft ist, über die Netzwerkschnittstelle als ein Teil eines Initialisierungsverfahrens der Heimbasisstation und/oder als ein Teil eines Wartungsverfahrens der Heimbasisstation zu empfangen.

13. Heimbasisstation gemäß Anspruch 9, wobei der Prozessor weiter ausgebildet ist zum:
Übertragen an das drahtlose Anwenderendgerät einer Liste der Vielzahl von verfügbaren PLMNs, zu welchem das drahtlose Anwenderendgerät verbunden werden kann; und
Einrichten des Kommunikationspfads, welcher identifiziert wurde, mit dem Heimbasisstation-Gateway, verknüpft mit dem ausgewählten PLMN ist.

14. Ein öffentliches terrestrisches Mobilfunknetzwerk, PLMN, (510, 530), umfassend:
ein Sicherheitsgateway (512, 532), aufweisend einen verknüpften Internetprotokoll-Sicherheit-, IPsec, Tunnel, wobei das Sicherheitsgateway zum Kommunizieren mit einer gemeinsamen Heimbasisstation (560), welche den mehreren PLMNs gemeinsam ist, unter Verwendung des IPsec-Tunnels ausgebildet ist;
ein Heimbasisstation-Gateway (514, 534), aufweisend eine verknüpfte S1- oder Iu-Schnittstelle, wobei das Heimbasisstation-Gateway zum Kommunizieren mit der gemeinsamen Heimbasisstation unter Verwendung der S1-oder Iu-Schnittstelle ausgebildet ist; und
ein Heimbasisstationbetriebs- und Wartungssystem, welches ebenso zum Kommunizieren mit der gemeinsamen Heimbasisstation ausgebildet ist;
wobei das Heimbasisstationbetriebs- und Wartungssystem weiter zum Bereitstellen der gemeinsamen Heimbasisstation einer Mappingtabelle, welche eine Liste der mehreren PLMNs, zu welchem die gemeinsame Heimbasisstation verbunden werden kann, und eine zugehörige Internetprotokoll-, IP, Adresse eines zugehörigen Sicherheitsgateways eines entsprechenden PLMN in der Liste umfasst, ausgebildet ist;
wobei die gemeinsame Heimbasisstation zum Kommunizieren mit dem Heimbasisstation-Gateway in Reaktion auf ein Empfangen einer Nachricht von einem drahtlosen Anwenderendgerät, welches eine IP-Adresse identifiziert, welche zu dem Sicherheitsgateway gehört, ausgebildet ist.

15. PLMN gemäß Anspruch 14, wobei das Heimbasisstationbetriebs- und Wartungssystem weiter zum Bereitstellen der gemeinsamen Heimbasisstation einer Mappingtabelle ausgebildet ist, welche eine Liste von mehreren PLMNs, zu welchen die gemeinsame Heimbasisstation verbunden werden kann, und die zugehörigen IP-Adressen der zugehörigen Sicherheitsgateways als Teil eines Initialisierungsverfahrens der gemeinsamen Heimbasisstation und/oder als ein Teil eines Wartungsverfahrens der gemeinsamen Heimbasisstation umfasst.

## Revendications

1. Procédé de partage d'une station de base de rattachement (560) entre de multiples réseaux mobiles publics terrestres, RMPT, (510, 530), comprenant les étapes, exécutées par la station de base de rattachement, consistant à :
recevoir d'un équipement d'utilisateur l'identification, parmi les multiples réseaux RMPT, d'un réseau RMPT sélectionné (570) auquel l'équipement d'utilisateur doit être connecté ;
identifier un tunnel de type IPsec, pour « *Internet Protocol security* », (540, 550) qui est associé à une passerelle de sécurité (512, 532) du réseau RMPT sélectionné et une interface S1 ou Iu qui est associée à une passerelle de station de base de rattachement (514, 534) du réseau RMPT sélectionné ; et
communiquer entre l'équipement d'utilisateur et le réseau RMPT sélectionné à l'aide du tunnel IPsec qui est associé à la passerelle de sécurité du réseau RMPT sélectionné et de l'interface S1 ou Iu qui est associée à la passerelle de station de base de rattachement du réseau RMPT sélectionné.

2. Procédé selon la revendication 1, dans lequel l'étape d'identification d'un tunnel IPsec qui est associé à une passerelle de sécurité du réseau RMPT sélectionné et d'une connexion S1 et d'une interface Iu qui sont associées à la passerelle de station de base de rattachement du réseau RMPT sélectionné comprend les étapes consistant à :
obtenir une table de correspondance qui fournit une liste des multiples réseaux RMPT avec lesquels l'équipement d'utilisateur peut être connecté et soit (a) une identification d'un tunnel IPsec correspondant qui est associé à une passerelle de sécurité correspondante d'un réseau RMPT respectif dans la liste et une identification d'une interface S1 ou Iu correspondante avec une passerelle de station de base de rattachement d'un réseau RMPT respectif dans la liste, soit (b) une adresse IP d'une passerelle de sécurité correspondante d'un réseau RMPT respectif dans la liste ; et
accéder à la table de correspondance pour identifier le tunnel IPsec qui est associé à une passerelle de sécurité du réseau RMPT sélectionné et l'interface S1 ou Iu associée à une passerelle de station de base de rattachement du réseau RMPT sélectionné ou l'adresse IP de la passerelle de sécurité qui est associée au réseau RMPT sélectionné.

3. Procédé selon la revendication 2, dans lequel l'étape d'obtention d'une table de correspondance comprend l'étape consistant à obtenir la table de correspondance auprès d'un système d'exploitation et de maintenance qui est associé à l'un des réseaux RMPT.

4. Procédé selon la revendication 3, dans lequel l'étape d'obtention de la table de correspondance auprès d'un système d'exploitation et de maintenance qui est associé à l'un des réseaux RMPT comprend l'étape consistant à obtenir la table de correspondance dans le cadre d'une procédure d'initialisation de la station de base de rattachement et/ou dans le cadre d'une procédure de maintenance de la station de base de rattachement.

5. Procédé selon la revendication 1, dans lequel l'étape de réception en provenance d'un équipement d'utilisateur d'une identification d'un réseau RMPT sélectionné auquel l'équipement d'utilisateur doit être connecté comprend les étapes consistant à :
transmettre à l'équipement d'utilisateur une liste des multiples réseaux RMPT ; et
recevoir de l'équipement d'utilisateur une identification du réseau RMPT sélectionné auquel l'équipement d'utilisateur doit être connecté, sous la forme d'un élément d'information qui pointe sur un réseau RMPT dans la liste des multiples réseaux RMPT qui avait été transmise ; ou
recevoir de l'équipement d'utilisateur l'identification du réseau RMPT sélectionné auquel l'équipement d'utilisateur doit être connecté sous la forme d'un élément information.

6. Procédé selon la revendication 5, dans lequel les étapes de transmission à l'équipement d'utilisateur d'une liste des multiples réseaux RMPT et de réception en provenance de l'équipement d'utilisateur de l'identification du réseau RMPT sélectionné auquel l'équipement d'utilisateur doit être connecté sous la forme d'un élément d'information qui pointe un réseau RMPT dans la liste des multiples réseaux RMPT qui avait été transmise ou de réception en provenance de l'équipement d'utilisateur de l'identification du réseau RMPT sélectionné auquel l'équipement d'utilisateur doit être connecté sous la forme d'un élément information sont exécutées pendant l'enregistrement de l'équipement d'utilisateur auprès de la station de base de rattachement.

7. Procédé selon la revendication 5, dans lequel la station de base de rattachement fonctionne selon la norme UTRAN et dans lequel l'étape de réception en provenance de l'équipement d'utilisateur de l'identification du réseau RMPT sélectionné auquel l'équipement d'utilisateur doit être connecté comprend l'étape consistant à recevoir de l'équipement d'utilisateur une identification du réseau RMPT sélectionné auquel l'équipement d'utilisateur doit être connecté sous la forme d'un élément d'information, dans lequel l'identification reçue comprend un message de transfert direct initial RRC comprenant l'identification du réseau RMPT sélectionné auquel l'équipement d'utilisateur doit être connecté ou un message d'achèvement de l'établissement de la connexion RRC comprenant l'identification du réseau RMPT sélectionné auquel l'équipement d'utilisateur doit être connecté.

8. Procédé selon la revendication 1, comprenant en outre l'étape consistant à :
établir le tunnel IPsec qui est associé à la passerelle de sécurité du réseau RMPT sélectionné et à l'interface S1 ou Iu qui est associée à la passerelle de station de base de rattachement du réseau RMPT sélectionné.

9. Station de base de rattachement (560) conçue pour se connecter à de multiples réseaux mobiles publics terrestres, RMPT, (510, 530), comprenant :
un émetteur-récepteur sans fil qui est configuré pour communiquer en sans fil avec un équipement d'utilisateur sans fil (570) ;
une interface de réseau qui est configurée pour établir un trajet de communication avec une passerelle de station de base de rattachement d'un réseau RMPT (514) ; et
un processeur qui est configuré pour recevoir d'un équipement d'utilisateur sans fil, via l'émetteur-récepteur sans fil, l'identification, parmi les multiples réseaux RMPT, d'un réseau RMPT sélectionné auquel l'équipement d'utilisateur sans fil doit être connecté ;
le processeur étant en outre configuré pour identifier un trajet de communication avec une passerelle de station de base de rattachement qui est associée au réseau RMPT sélectionné, dans lequel le trajet de communication comprend un tunnel de type IPsec, pour « *Internet Protocol security* », (540, 550) qui est associé à une passerelle de sécurité (512, 532) du réseau RMPT sélectionné et à une interface S1 ou Iu qui est associée à une passerelle de station de base de rattachement du réseau RMPT sélectionné, et pour commander à l'interface de réseau de communiquer avec le réseau RMPT sélectionné qui a été identifié, via le trajet de communication qui a été identifié, à l'aide du tunnel IPsec qui est associé à la passerelle de sécurité du réseau RMPT sélectionné et à l'interface S1 ou Iu qui est associée à la passerelle de station de base de rattachement du réseau RMPT sélectionné.

10. Station de base de rattachement selon la revendication 9, comprenant en outre :
une table de correspondance dans une mémoire qui est configurée pour contenir une liste des réseaux RMPT disponibles avec lesquels l'équipement d'utilisateur sans fil et un trajet de communication correspondant de type IP vers une passerelle de station de base de rattachement correspondante d'un réseau RMPT respectif dans la liste ; et
dans lequel le processeur est configuré pour identifier un trajet de communication de type IP vers une passerelle de station de base de rattachement qui est associée au réseau RMPT sélectionné en accédant à la table de correspondance, dans laquelle le trajet de communication de type IP comprend une adresse IP d'une passerelle de sécurité correspondante d'un réseau RMPT respectif dans la liste.

11. Station de base de rattachement selon la revendication 10, dans laquelle le processeur est en outre configuré pour recevoir la table de correspondance de l'un des réseaux RMPT, via l'interface de réseau.

12. Station de base de rattachement selon la revendication 11, dans laquelle le processeur est en outre configuré pour recevoir la table de correspondance en provenance d'un système d'exploitation et de maintenance qui est associé à l'un des réseaux RMPT, via l'interface de réseau, dans le cadre d'une procédure d'initialisation de la station de base de rattachement et/ou dans le cadre d'une procédure de maintenance de la station de base de rattachement.

13. Station de base de rattachement selon la revendication 9, dans laquelle le processeur est en outre configuré pour :
transmettre à l'équipement d'utilisateur sans fil une liste de la pluralité de réseaux RMPT disponibles auxquels l'équipement d'utilisateur sans fil peut être connecté ; et
établir le trajet de communication qui a été identifié avec la passerelle de station de base de rattachement qui est associée au réseau RMPT sélectionné.

14. Réseau mobile public terrestre, RMPT, (510, 530), comprenant :
une passerelle de sécurité (512, 532) possédant un tunnel de type IPsec, pour « *Internet Protocol security* », dans lequel la passerelle de sécurité est configurée pour communiquer avec une station de base de rattachement partagée (560) qui est partagée entre de multiples réseaux RMPT, à l'aide du tunnel IPsec ;
une passerelle de station de base de rattachement (514, 534) possédant une interface S1 ou Iu associée, dans lequel la passerelle de station de base de rattachement est configurée pour communiquer avec la station de base de rattachement partagée à l'aide de l'interface S1 ou Iu ; et
un système d'exploitation et de maintenance de station de base de rattachement qui est également configuré pour communiquer avec la station de base de rattachement partagée ;
le système d'exploitation et de maintenance de station de base de rattachement étant en outre configuré pour fournir à la station de base de rattachement partagée une table de correspondance qui comprend une liste des multiples réseaux RMPT auxquels la station de base de rattachement partagée peut être connectée et une adresse correspondante du protocole internet, IP, d'une passerelle de sécurité correspondante d'un réseau RMPT respectif dans la liste ;
dans lequel la station de base de rattachement partagée est configurée pour communiquer avec la passerelle de station de base de rattachement après avoir reçu un message d'un équipement d'utilisateur sans fil qui identifie une adresse IP qui correspond à la passerelle de sécurité.

15. Réseau RMPT selon la revendication 14, dans lequel le système d'exploitation et de maintenance de station de base de rattachement est en outre configuré pour fournir à la station de base de rattachement partagée une table de correspondance qui comprend une liste des multiples réseaux RMPT auxquels la station de base de rattachement partagée peut être connectée et les adresses IP correspondantes des passerelles de sécurité correspondantes dans le cadre d'une procédure d'initialisation de la station de base de rattachement partagée et/ou dans le cadre d'une procédure de maintenance de la station de base de rattachement partagée.
